# EUROPEAN PATENT APPLICATION

(11) **EP 2 669 568 A1**
(43) Date of publication of application: **04.12.2013**
(21) Application number: 12170261.7
(22) Date of filing: 31.05.2012
(51) Int. Cl.: F17D 1/07, F25B 27/02, F02C 6/06

(54) **System and method for recovering heat from a gas turbine**

(71) Applicant: Siemens Aktiengesellschaft, 80333 München (DE)
(72) Inventor: Ahmad, Suhel, Dr., 47198 Duisburg (DE); Benthin, Harald, 47443 Moers (DE); Danov, Vladimir, Dr., 91056 Erlangen (DE); Schäfer, Jochen, Dr., 90408 Nürnberg (DE)

(57) **Abstract**

A system (1) for recovering heat from a gas turbine (10) is presented. The system includes the gas turbine (10) including at least one compressor (3) and an expansion turbine (2), the expansion turbine (2) located downstream of the compressor (3), a combustor (4) located between the compressor (3) and the expansion turbine (2), and a heat extraction system (9) located on an exhaust gas side (8) of the gas turbine for extracting heat from the exhaust gas (20) and producing a cold stream of fluid (22), wherein the cold stream of fluid is utilized to cool an inlet gas (24) supplied to a gas compressor (5) coupled to the gas turbine (10).

And a corresponding method for recovering heat from a gas turbine (10) to produce a cold stream of fluid fluid is utilized to cool an inlet gas (24) supplied to a gas compressor (5) coupled to the gas turbine (10).

## Description

The present invention relates to a system and method for recovering heat from a gas turbine.

Gas turbine power plants employ gas turbines to generate electrical power. The gas turbine system includes a compressor coupled to a gas turbine. Gas turbine systems operate on the thermodynamic cycle known as the Brayton cycle, wherein air from the atmosphere is compressed, heated, and then expanded, with the excess of power produced by an expander, which is also called an expansion turbine, over the power consumed by the compressor used for power generation. The power produced by the expansion turbine and consumed by a compressor is proportional to the absolute temperature of the gas passing through the device. Consequently, it is advantageous to operate the expansion turbine at the highest practical temperature consistent with economic materials and internal blade cooling technology and to operate the compressor with inlet air flow at as low a temperature as possible.

Exhaust gas from the gas turbine, which is generally at a high temperature has been used to recover heat. This recovered heat may be utilized to produce steam and ultimately used in a steam turbine for generating power.

However, in a gas turbine plant this exhaust gas is let off into the atmosphere thereby resulting in wastage of significant amount of heat.

In case of gas compressor stations, used for transporting gas in a pipeline from one location to another, compression of the gas is required periodically along the pipe. The gas compressor stations compress the gas by a turbine, which includes compressors. The turbine compressor gains their energy by utilizing the gas that they compress or alternatively, the compressor may also be operated by using an electric motor.

Therefore, a significant amount of energy is utilized to compress the gas during transportation thereby decreasing the efficiency.

In order to enhance the power output of a gas turbine either the work done by the turbine has to be increased or the work done by compressor has to be decreased. Therefore, if the inlet gas to the compressor is at low temperature the compressor work can be reduced which would increase the output work of the turbine.

It is therefore an object of the present invention to decrease the work done by compressor thereby increasing compressor efficiency for a compressor gas station.

The object is achieved by providing a system for recovering heat from a gas turbine according to claim 1 and a method for recovering heat from a gas turbine according to claim 9.

According to the invention, a system for recovering heat from a gas turbine is provided. The system includes a gas turbine having an exhaust gas side, wherein the gas turbine comprises at least one compressor and an expansion turbine located downstream of the compressor, a combustor located between the compressor and the expansion turbine, and a heat extraction system located on the exhaust gas side of the gas turbine for extracting heat from the exhaust gas and produce a cold stream of fluid, wherein the cold stream of fluid is utilized to cool an inlet gas supplied to a gas compressor. By using the heat extraction system the heat from the exhaust gas is recovered which is utilized by the heat extraction system to cool an inlet gas supplied to the gas compressor with low temperature at the inlet thereby decreasing the work done by the gas compressor. This arrangement increases the efficiency of the gas compressor station.

In one embodiment, the heat extraction system includes an internal heat exchanger, and a chiller for utilizing the heat from the internal heat exchanger to produce the cold stream of fluid. The heat exchanger recovers heat from the exhaust gas and transfers the heat to the fluid and this heat of the fluid is utilized by the chiller to produce cooling, the chiller cools the fluid which is thereafter used to cool the inlet gas. Such an arrangement provides an efficient utilization of heat by the system to increase efficiency of the gas turbine.

In one embodiment, the chiller is an absorption chiller or an adsorption chiller. Use of absorption chiller enables chilling without the use of electricity. The adsorption chiller provides cooling by use of an adsorbent material. The adsorption chiller and absorption chiller do not require moving parts and are relatively quiet and environment friendly.

In one embodiment, the chiller includes a heat sink and a pump driven by electrical power to produce a cold stream of fluid.

In one embodiment, the fluid such as water is used to absorb heat from the exhaust gas. Water has a high specific heat capacity, density and thermal conductivity which allow water to transmit/ absorb heat over large area with less volumetric flow and reduced temperature difference.

In one embodiment, heat from the exhaust gas from the gas turbine is transferred to the internal heat exchanger in the heat extraction system. Heat exchanger enables transfer of heat from one medium to the other, hence by using the heat exchanger, heat is effectively transferred from the exhaust gas to the fluid such as water.

In one embodiment, the system includes an external heat exchanger for transferring heat from the cold stream of fluid to the inlet gas supplied to the gas compressor. By using the external heat exchanger, the inlet gas is cooled before it is sent to the gas compressor, thereby resulting in less work needed by the gas compressor to compress the inlet gas.

In one embodiment, the gas compressor is coupled to a shaft on the exhaust side of the gas turbine which enables the turbine to drive the compressor resulting in compression of the gas to obtain a compressed gas which is thereafter directed to the pipeline.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawings.
FIG. 1 is a schematic diagram of an exemplary system for recovering heat from a gas turbine, and
FIG. 2 is a flow diagram depicting an exemplary method for recovering heat from a gas turbine, in accordance with aspects of the present technique.

Embodiments of the present invention relate to a system and method for recovering heat and more particularly to a system and method for recovering heat from a gas turbine.

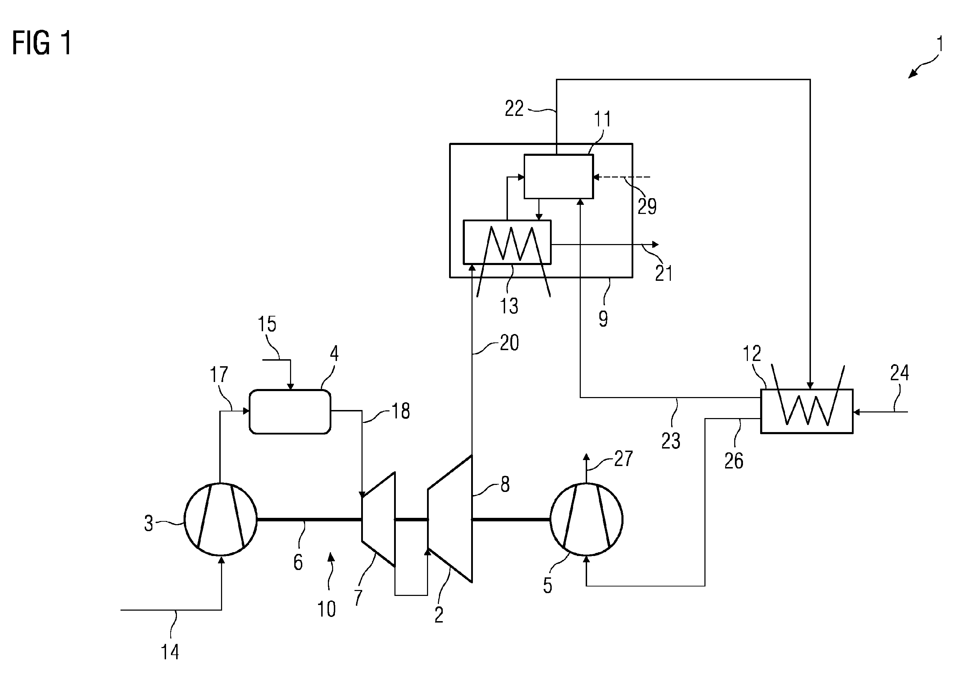

**FIG. 1** is a schematic diagram of an exemplary system 1 for recovering heat. The system 1 is typically a gas compressor station meant for compressing gas while transporting from one location to another. The system 1 includes a gas turbine 10 including a compressor 3, which is typically an air compressor, a combustor 4 and one or more turbines 2, 7, which are generally a high pressure turbine 7 and a low pressure turbine 2 which is also referred to as an expansion turbine. The turbines 7, 2 are located downstream of the compressor 3, such that the compressor 3 is coupled to the high pressure turbine 7. A shaft 6 is shown connecting the high pressure turbine 7 to drive the compressor 3.

During operation, the compressor 3 takes in air 14 and provides a compressed air 17 to the combustor 4, which mixes the compressed air 17 with fuel or gas 15, providing combustion gases also known as the working gas or working medium 18 via a transition to the expansion turbine 2, which may be used to generate electricity for example. In the presently contemplated configuration a gas compressor 5 is operatively coupled to the gas turbine through the shaft 6. As an example, the gas compressor 5 may be a centrifugal compressor. More particularly, the gas compressor 5 is coupled to the turbine 7 towards the exhaust side 8 through the shaft 6. The gas compressor 5 compresses an inlet gas 26 and directs a compressed gas 27 to a pipeline meant for transportation of compressed gas 27 from one location to the other.

In accordance with aspects of the present technique, the system 1 includes a heat extraction system 9 for extracting heat from an exhaust gas 20. The exhaust gas 20 is emitted during the operation of the turbine 2 and is directed into the heat extraction system 9.

In the presently contemplated configuration, the heat extraction system 9 includes an internal heat exchanger 13 and a chiller 11. The chiller 11 may be an absorption chiller or an adsorption chiller. Heat from the exhaust gas 20 is transferred to a liquid medium or fluid such as water via the heat exchanger 13 and the exhaust gas is let off as an outlet exhaust gas 21 into the surroundings.

In accordance with aspects of the present technique, the fluid is directed to pass through the chiller 11 which lowers the temperature of the fluid. The temperature of the fluid is reduced to about 5 degree centigrade by the chiller 11 in the heat extraction system 9. A pump (not shown) driven by electrical power 29 directs the cold stream of fluid 22 from the heat extraction system 9 to an external heat exchanger 12 located upstream of the gas compressor 5.

Alternatively, the chiller 11 may include a heat sink (not shown) and a pump driven by electrical power 29 to provide a cold stream of fluid 22 which is sent to the second heat exchanger 12. Additionally, the chiller 11 also includes a generator, a condenser connected to the condenser, an evaporator and an absorber arranged in a circuit to produce the cold stream of fluid 22.

Gas 24, also referred to as an inlet gas from a pipeline (not shown) is passed through the external heat exchanger 12 which cools the gas 24 to produce a cooled gas 26. The external heat exchanger transfers heat from the gas 24 to the cold stream of fluid 22 which in turns heats up the fluid. The fluid is recirculated as heated fluid 23 into the heat extraction system 9 and more particularly to the chiller 11.

Thereafter, the cooled gas 26 is sent to the gas compressor 5, which requires less amount of work to compress the cooled gas 26 and thus produce the compressed gas 27.

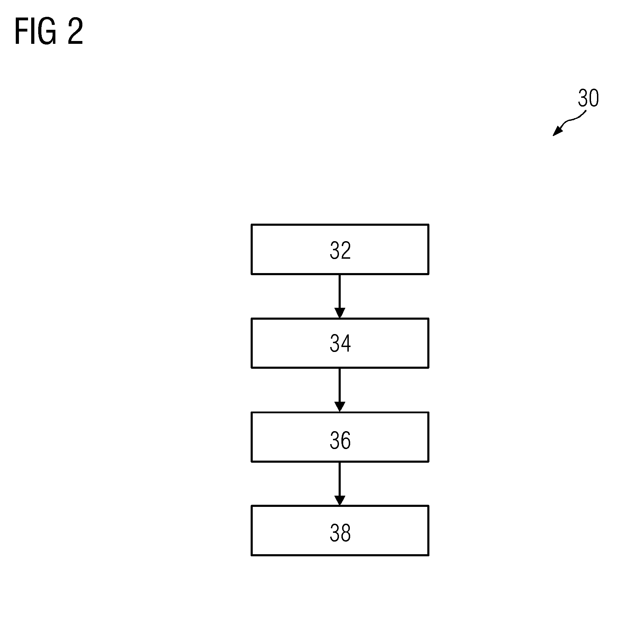

Referring now to **FIG. 2****,** a flow diagram depicting an exemplary method 30 for recovering heat from a gas turbine 10 is presented. The method 30 includes directing the exhaust gas 20 produced by the gas turbine 10 to the heat extraction system 9, as at step 32.

As previously noted, the gas turbine 10 includes the compressor 3, the combustor 4 and one or more turbines 2, 7 and a gas compressor 5 coupled to the gas turbine 10, more particularly to the turbine 2 of the gas turbine 10. Air 14 is passed into the compressor 3 wherein the air 14 is compressed. The compressed air 17 along with fuel 15 is burnt in the combustion chamber of the combustor 4 to produce a working medium 18 which is used to drive the turbine 7, 2. The turbine 2 emits exhaust gas 20 which is at a high temperature in the range of about 200 degree centigrade to about 500 degree centigrade for example. This hot exhaust gas 20 is directed into the exemplary heat extraction system 9.

At step 34, the heat from the exhaust gas 20 is extracted by the heat extraction system 9 and this heat is utilized by the chiller 11 in the heat extraction system to produce cooling in a fluid. The fluid may be water for example. More particularly, the heat is transferred to the fluid from the exhaust gas 20 by the internal heat exchanger 13. Thereafter, the hot fluid is directed to the chiller 11 which cools down the fluid to a temperature of about 5 degree centigrade.

As previously noted, the chiller 11 includes a heat sink and a pump driven by electrical power 29 to produce cold stream of fluid 22. Thereafter, the cold stream of fluid 22 is directed into the external heat exchanger 12 via the pump in the chiller 11.

At step 36, the cold stream of fluid 22 is directed to the external heat exchanger 12 for cooling an inlet gas 24 from a gas pipeline.

At step 38, gas 24 from the pipeline is passed through the external heat exchanger 12 resulting in the cooling of the gas, to produce cooled inlet gas 26 which is thereafter directed into the gas compressor 5 coupled to the gas turbine to produce a compressed gas 27.

Subsequently, the compressed gas 27 is directed into the pipeline for transporting to a distant location.

In accordance with aspects of the present technique, the cooled inlet gas 26 requires less work to be done by the gas compressor 5 for compression, thereby increasing the efficiency of the gas compressor 5 from about 8 percent to about 10 percent, resulting in lesser fuel consumption by the gas turbine.

The present invention as described hereinabove has several advantages such as, but not limited to an increase in the efficiency of a gas turbine system by utilizing heat from the exhaust gas to cool down the inlet gas of the compressor.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A system (1) for recovering heat from a gas turbine (10), comprising:
- at least one compressor (3) and an expansion turbine (2) of the gas turbine (10), the expansion turbine (2) located downstream of the compressor (3),
- a combustor (4) located between the compressor (3) and the expansion turbine (2), and
- a heat extraction system (9) located on an exhaust gas side (8) of the gas turbine for extracting heat from an exhaust gas (20) and producing a cold stream of fluid (22), wherein the cold stream of fluid (22) is utilized to cool an inlet gas (24) supplied to a gas compressor (5) coupled to the gas turbine (10).

2. The system (1) according to claim 1, wherein the heat extraction system (9) comprises an internal heat exchanger (13), and a chiller (11) for utilizing the heat from the internal heat exchanger (13) to produce the cold stream of fluid (22).

3. The system (1) according to claim 2, wherein the chiller (11) is an absorption chiller or an adsorption chiller.

4. The system (1) according to any of the claims 2 to 3, wherein the chiller (11) comprises a heat sink, and a pump driven by electrical power (29) for producing the cold stream of fluid (22).

5. The system according to any of the claims 1 to 4, wherein heat from the exhaust gas (20) of the gas turbine (10) is transferred to the internal heat exchanger (13) in the heat extraction system (9).

6. The system (1) according to any of the claims 1 to 5, further comprising an external heat exchanger (12) for transferring heat from the cold stream of fluid (22) to the inlet gas (24) to produce a cooled inlet gas (26) for supplying to the gas compressor (5).

7. The system (1) according to claim 6, wherein the gas compressor (5) compresses the cooled inlet gas (26) to produce a compressed gas (27).

8. The system (1) according to any of the claims 1 to 7, wherein the gas compressor (5) is coupled to a shaft (6) on the exhaust side (8) of the gas turbine (10).

9. The system (1) according to any of the claims 1 to 8, wherein the gas turbine (10) further comprises a high pressure turbine (7) for driving the compressor (3).

10. The method (30) for recovering heat from a gas turbine (10), comprising:
- directing (32) an exhaust gas (20) produced by the gas turbine (10) to a heat extraction system (9),
- extracting (34) heat from the exhaust gas (20) by the heat extraction system (9) and utilizing the heat by a chiller (11) in the heat extraction system (9) to produce a cold stream of fluid (22), and
- directing (36) the cold stream of fluid (22) to an external heat exchanger (12) for cooling an inlet gas (24), and
- directing (38) a cooled inlet gas (26) into a gas compressor (5) coupled to the gas turbine (10) to produce a compressed gas (27).

11. The method (30) according to claim 10, further comprising directing the compressed gas (27) from the gas compressor (5) into a gas pipeline.

12. The method (30) according to claims 10 and 11, further comprising transferring the heat from the exhaust gas (20) to the fluid via an internal heat exchanger (13) in the heat extraction system (9).

13. The method (30) according to any of the claims 10 to 12, further comprising cooling the fluid by the chiller (11), wherein the chiller (11) comprises a heat sink and a pump driven by electrical power (29).

14. The method (30) according to any of the claims 10 to 13, further comprising directing a compressed air (17) and fuel (15) into a combustor (4) of the gas turbine (10) to produce a working medium (18) for the gas turbine (10).

15. The method (30) according to any of the claims 10 to 14, further comprising recirculating the cold stream of fluid (22) into the heat extraction system (9).
